**Europäisches Patentamt**

**European Patent Office**

**Office européen des brevets**

(19)

(11) Publication number : **0 486 574 B1**

# EUROPEAN PATENT SPECIFICATION

(12)

(45) Date of publication of patent specification :
**23.02.94 Bulletin 94/08**

(51) Int. Cl.⁵ : **C02F 1/28,** C02F 1/48,
C02F 1/52, C02F 1/24,
C02F 9/00

(21) Application number : **90912352.3**

(22) Date of filing : **15.08.90**

(86) International application number :
**PCT/AU90/00348**

(87) International publication number :
**WO 91/02698 07.03.91 Gazette 91/06**

(54) **IMPROVED SEWAGE TREATMENT PROCESS.**

(30) Priority : **16.08.89 AU 5808/89**

(43) Date of publication of application :
**27.05.92 Bulletin 92/22**

(45) Publication of the grant of the patent :
**23.02.94 Bulletin 94/08**

(84) Designated Contracting States :
**AT BE CH DE DK ES FR GB IT LI LU NL SE**

(56) References cited :
**LU-A- 45 272**
**US-A- 4 427 550**

(73) Proprietor : **THE COMMONWEALTH
SCIENTIFIC AND INDUSTRIAL RESEARCH
ORGANIZATION
Limestone Avenue, P.O. Box 1600
Canberra, Australian Capital Territory 2601
(AU)**

(72) Inventor : **PRIESTLEY, Anthony, John
86 Shoubra Road
Elsternwick, VIC 3185 (AU)**
Inventor : **SUDARMANA, David, Louis
1 Vogue Avenue
Vermont South, VIC 3133 (AU)**

(74) Representative : **Marshall, Monica Anne
J.A. Kemp & Co. 14 South Square Gray's Inn
London WC1R 5LX (GB)**

## Description

This invention relates to an improved process for the treatment of sewage or other wastewater containing organics to provide a clear liquid effluent which may be disposed of safely, e.g. into the ocean or a waterway and a dense sludge suitable for landfill or other uses.

Australian Patent Specification No. 79700/87, the complete disclosure of which is incorporated herein by reference, describes a process for treating sewage in which a particulate mineral or clay material (referred as a coagulant/adsorbent") is mixed with the raw sewage under slightly acidic conditions in conjunction with the addition of a coagulant. After separation of the clarified sewage, a concentrated slurry containing the organic matter originally present in the raw sewage can be produced by the addition of alkali to the separated particulate mineral or clay material and by passing the mixture through a solid separation device. The concentrated slurry is then treated by anaerobic digestion for about one day to produce an effluent which is passed to a settling pond where the particulate biomass eventually settles out. The overflow from the settling pond is suitable for recycling for washing purposes in the plant.

The concentrated slurry is high in water content and causes problems if it is disposed of by landfill without anaerobic digestion. Anaerobic digestion is a slow and uncertain process susceptible to environmental and feed water changes. The need for further treatment in settling ponds increases the area of land needed and hence the capital cost of the sewage treatment plant as well as the time required for treatment.

Surprisingly, we have now found that the concentrated slurry can be further concentrated by the addition of acid to lower the pH of the slurry to 4 or less whereby a dense sludge is quickly formed. The supernatant liquid may be easily separated and used to acidify the incoming raw sewage. The sludge being high in solids can be readily dewatered before disposal to landfill or reuse.

According to the present invention, there is provided a process for the treatment of sewage or other wastewater containing organic matter which comprises the steps of:-

(a) mixing sewage or other wastewater containing organic matter with a coagulant/adsorbent which is a finely divided particulate mineral or clay material the individual particles of which have a thin hydroxylated surface layer, under conditions whereby at least a substantial proportion of the organic material in the sewage or other wastewater containing organic matter becomes attached to the coagulant/adsorbent;

(b) separating the coagulant/adsorbent with attached organic material from the mixture to leave a treated liquid effluent:

(c) treating the separated coagulant/adsorben- from step (b) with alkali thereby to release the organic material therefrom, separating the coagulant/adsorbent from the resultant concentrated slurry containing the organic material; and

(d) adding acid to the concentrated slurry of organic material to lower the pH to less than 4 and thereby to obtain a sludge which separates under gravity and a supernatant liquor which optionally may be recycled to acidify the incoming sewage or other wastewater containing organic matter.

The coagulant/adsorbents which may be used in accordance with the present invention may be of two notionally different types, i.e.: (I) those in which the hydroxylated layer is derived directly from the substance of the particles; and (II) those in which the layer is derived from another substance.

The preferred coagulant/adsorbent materials are those of type I and these can be derived from a wide variety of minerals and clays provided the nature of the mineral is such as to permit the ready formation of the hydroxylated surface. In this respect oxides and silicates are particularly useful.

Examples of such minerals include zinc oxide, silica and siliceous materials such as sand and glass and clay minerals such as mica, china clay and pyrophillite. This list is not exhaustive, however, and many other minerals are suitable for use in this invention.

In the most preferred embodiment of this invention, the particulate material is a magnetic or magnetisable material. For this purpose iron oxides, such as gamma iron oxide or magnetite, which are eminently suitable, or ferrites, such as barium ferrite or spinel ferrite, can be used.

The coagulent/adsorbent particles should have a particle size of 50 microns or less, preferably 1 to 10 microns more preferably 1 to 5 microns.

The preparation of finely divided coagulant/adsorbent particles of type I to give each a thin hydroxylated surface layer is easily carried out, usually by suspending the particles in a basic, preferably an alkali, solution for a short period of time, preferably in the presence of air. Sodium hydroxide is suitable, but potassium hydroxide, lime or aqueous ammonia may also be used. Generally, alkali concentrations should be at least 0.01M, preferably about 0.05M to 0.1M, at which level the treatment is effective after about 10 minutes. Shorter treatment times can be achieved by the use of elevated temperatures and/or higher alkali concentrations. A suggested temperature range is 40-60°C. For example, a satisfactory material is produced using either 0.1M sodium hydroxide at room temperature (i.e. about 20°C) for ten minutes, or 0.05M sodium hydroxide solution at about 60°C for five minutes.

Because the hydroxylated layer of the type II coagulant/adsorbent is provided by a different substance, to the material of the mineral or clay particle the range of starting materials is broader. A wide variety of minerals and clays can be used provided the nature of the mineral or clay is such as to permit the ready deposition of a hydroxide gel on its surface. In this respect oxides, sulphates, silicates and carbonates are particularly useful. Examples of such minerals include calcium sulphate, calcium carbonate, zinc oxide and barium sulphate. This list is not exhaustive, however, and many other minerals are suitable for use in this invention. In some cases, pre-treatment of the surface of the mineral may be required to produce a satisfactory deposition of the hydroxide layer. Yet another alternative is to use hollow microspheres, e.g. of glass for the production of gel particles which can be separated from the liquid effluent, after the adsorption of the organic material in step (a), by flotation rather than sedimentation.

The hydroxylated layer o; the coagulant/adsorbent particles of type II can be provided by any of a number of metal hydroxides, the requirements being substantial insolubility in water and a metal valency preferably of three or more.

Suitable metals with this characteristic are iron, aluminium, zirconium and thorium. Ferric hydroxide is preferred because it is cheap, and exceptionally insoluble, over a wide pH range. For example, it does not readily dissolve at high pH, as does aluminium hydroxide.

The preparation of the coated particle of type II is also easily carried out, usually by suspending the particles in water, adding a salt of a suitable metal followed by an alkaline material, preferably in aqueous solution which will precipitate the metal hydroxide which then forms a coating on the particle. Typically, chlorides, sulphates, nitrates or other mineral acid salts of the metals are suitable; ferric chloride or aluminium sulphate are examples. The alkaline material may be sodium hydroxide, calcium hydroxide, ammonia or similar soluble material. The concentration and temperature at which the preparation is carried out is generally not critical.

In the case where magnetite or other iron oxide materials are used as the basis for type II particles, the metal salt which is employed to produce the hydroxide layer may be obtained by first adding acid to the suspension of the particles (to give ferric and/or ferrous salts in solution from the iron oxide) and then adding the alkaline material.

After preparation, it is best if the coated particles are not permitted to dry out. This can be avoided by keeping them under water. The thickness of the hydroxylated layer on the particles is not important since the flocculation or coagulation is a surface effect.

An important advantage of the process of the present invention is that the coagulant/adsorbent particles can be recycled many times. To achieve this, the adsorbed material is removed by raising the pH of a suspension of the adsorbent in water. In the case of type I coagulant/adsorbents, the coagulating properties may be regenerated by treatment with alkali solution; these two treatments may be combined.

As in the "Sirofloc" process of water clarification described in the applicant's Australian Patent No. 512,553, the process of the present invention may be enhanced by the addition to the liquid under treatment of a suitable coagulant, such as polyelectrolyte (cationic, anionic or non-ionic) and/or an inorganic coagulant which provides multi-valent cations such as $Fe^{2+}$ (e.g. ferrous sulphate). More usually the multi-valent cations will have a valency of three or more, such as $Fe^{3+}$ or $Al^{3+}$, (e.g. from alum or ferric chloride). These coagulants are not essential but when both types (i.e. polyelectrolytes and the inorganic coagulants) are present they complement each other. The polyelectrolyte may be present in the range 0 to 10 mg/L, preferably from 2 to 5 mg/L. The inorganic coagulant may be present in the range 0 to 500 mg/L, preferably 20 to 50 mg/L.

The separated coagulant/adsorbent from step (c) of the process may be optionally recycled to step (a).

Any strong acid may be used to reduce the pH in step (d) of the process. Acids of this type include mineral acids, such as, sulphuric acid or hydrochloric acid and organic acids, such as, fluoroacetic acid.

The sludge produced by the process of the invention contains metal hydroxides and organic matter and optionally may be dried by any conventional technique, including centrifugation, belt-pressing or microwave radiation.

Alternatively, the organic material may be removed from the sludge by the process known as "wet air oxidation" leaving only a small volume of metal oxides for disposal.

The preferred coagulant/adsorbent is magnetite and the following detailed description will refer to that material. It will be appreciated however, that reference to magnetite includes mutatis mutandis reference to other coagulant/adsorbents.

Reference will now be made to the accompanying drawing in which:

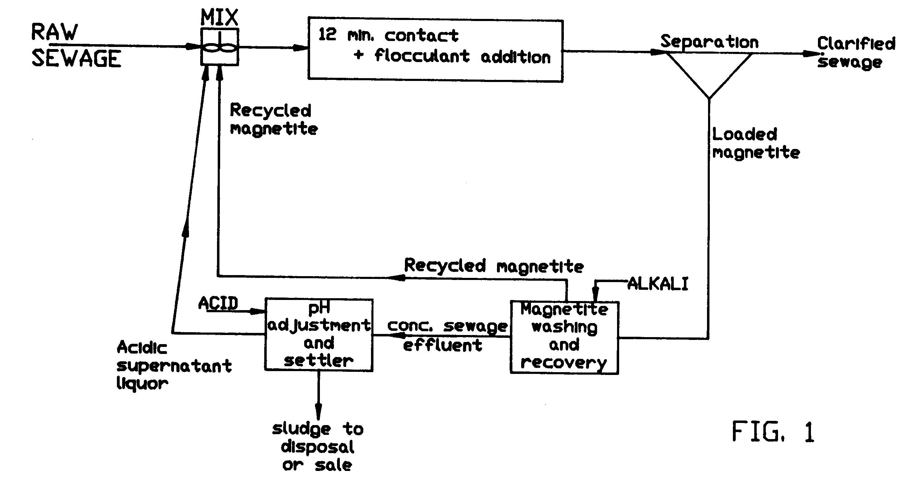

Figure 1 is a flow diagram showing the process of the invention in its basic form.

Sewage or other wastewater containing organic matter is mixed with finely-divided cleaned recycled magnetite particles which have been regenerated by suspension in a solution of caustic soda to produce a thin hydroxylated surface layer, and the mixture is stirred to provide good contact of sewage or other wastewater containing organic matter with the regenerated magnetite particles which are preferably in the size range 1 to 10 microns. The pH level may be adjusted by acid addition to be in the range 5 to 9, preferably 5.5 to 6.5 and the addition of an inorganic coagulant and/or a coagulant aid (e.g. a polyelectrolyte) may also be necessary to achieve a satisfactory effluent quality depending on the strength and composition of the input feed. After 2 to 20 minutes, preferably 10 to 15 minutes, of contact the magnetite slurry is separated from the treated effluent which may go to polishing ponds for final treatment before discharge. The magnetite particles, which now have attached to them most of the organic material originally present in the sewage or other wastewater, are then cleaned by stripping off the organic material using a dilute solution of sodium hydroxide, ammonia, or potassium hydroxide or, for example, a lime slurry which also regenerates the magnetite. The magnetite can then be recycled while the liquid slurry produced in the stripping or regeneration step is acidified to a pH level below 4 by the addition of sulphuric acid. Acidification causes a sludge of organic matter to separate out by gravity. This sludge is formed within a few minutes of acid addition but takes about 30 minutes to fully settle out from the supernatant liquor. The sludge can also be rapidly separated by dissolved air flotation. The sludge thus produced can then be readily dewatered by a number of standard techniques, for example, centrifugation, belt press filtration, and then dried on sand beds to produce a granular cake suitable for disposal by landfill. The acidic supernatant liquor can be recycled to acidify the incoming sewage or other wastewater.

The invention is further described in and illustrated by the following examples. These examples are not to be construed as limiting the invention in any way.

The following abbreviation is used:-

COD - chemical oxygen demand

Example 1

Preliminary experiments were performed in which 50 ml of the sewage concentrate (old stock, stored 1 week in a cool room) was acidified from pH 10 down to about pH 7. However, at pH 7 little coagulation occured. Polyelectrolyte was then added to the sewage concentrate after pH reduction to 7 and again, no further coagulation was observed. The pH of the sewage concentrate was further reduced by slowly adding acid. Coagulation was observed to commence at a pH of about 3.5, the amount of acid added being 30mmole $H^+$/litre of sewage concentrate.

Example 2

A set of experiments were performed to investigate the effect of pH on fresh sewage concentrate. The amounts of acid added were 30, 40 and 50mmole $H^+$/litre of sewage concentrate, respectively. The results are shown in Table 1. The pH of the sewage concentrate drops to 3.5, 3 and 2.5 respectively, while the percentage COD removed from the sewage concentrate increased from 80 to 85%. The sludge volume after 45 minutes settling was 35% of the total volume. This sludge volume could be reduced further in a thickener.

Example 3

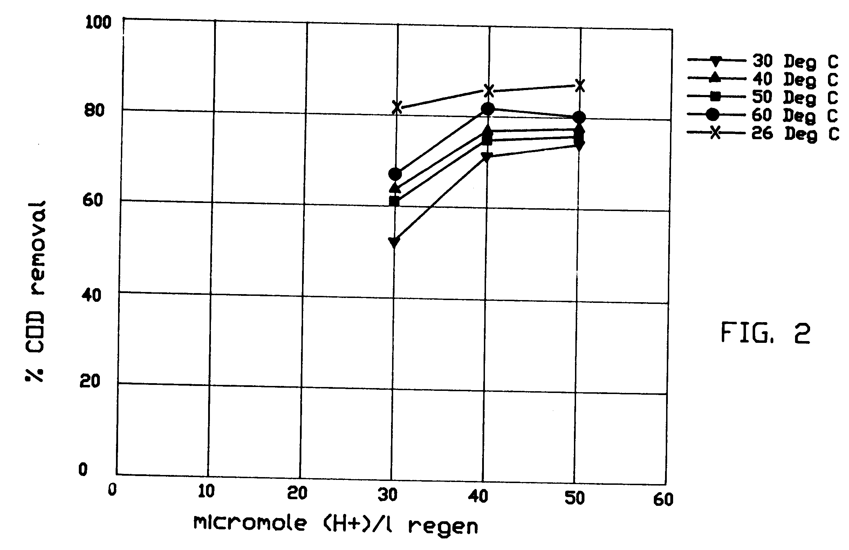

Experiments were performed to investigate the effect of temperature and acid dosage on the coagulation by acidification process. The temperatures chosen were 30, 40, 50 and 60°C. The results of these experiments are shown in Table 2. The same batch of sewage concentrate (2 days old) as used in Example 2 was employed. The results show that the percentage COD removal was relatively independent of temperature and acid dosage (above 40 mmole $H^+$/litre of sewage concentrate) and that fresh sewage concentrate can be coagulated better than old sewage concentrate. The results are also shown in Figure 2.

Example 4

The effect of higher doses of acid on both the release of iron into solution and the capture of organics from both fresh and stored sewage concentrate is demonstrated by the results in Table 3 which were obtained using the method of Example 2. Since the COD removal is relatively unaffected by temperature (see Example 3) the experiments were performed at room temperature (20°C). Between 50 and 70% of the iron present in the sewage concentrate can be solubilised by the addition of between 80 and 100 mmole $H^+$/litre concentrate. At this acid dose about 90% of the COD in the sewage concentrate was precipitated. Visually the flocs formed at higher acid doses were larger and faster settling. The higher iron removal has advantages where the clarified supernatant is recycled to acidify the incoming sewage.

Example 5

Jar tests were performed to determine the effect of pH on the release of aluminium and COD into solution during the acidification of sewage concentrate derived from the "Sirofloc" process for sewage treatment. Aluminium sulphate was being used as the coagulant in the "Sirofloc" plant and the sewage concentrate from the plant was used for these tests. The results of tests using increasing amounts of sulphuric acid to reduce the pH of the sewage concentrate are shown in Table 4.

The settling characteristics of the formed floc and the clarity of the final treated sewage concentrate varied with the pH of the test. At pH 7.1, the floc formation was not good and the resultant solution was very turbid which resulted in high COD in the treated sewage concetrate. The aluminium concentration in solution was also high as would be expected at this pH. At pH between about 3.0 and 5.2 the floc formation was good since aluminium solubility was low however, the floc formed was slow settling. The resultant clarifed solution was clear and of low COD. At pH less than 3.0, the solubility of aluminium increased and the resultant floc formed was faster settling and settled to a lower volume than at the higher pH. COD released into solution increased as pH decreased. There was obviously a compromise between release of COD into solution and the recovery of aluminium into solution.

EP 0 486 574 B1

TABLE 1

| SAMPLE NUMBER | TEMP °C | ACID/1 mmole [H⁺] | FINAL pH | % COD REMOVED | SLUDGE VOL % INITIAL |
|---|---|---|---|---|---|
| 1 | 26 | 30 | 3.5 | 80 | 38 |
| 2 | 26 | 40 | 3.0 | 84 | 35 |
| 3 | 26 | 50 | 2.5 | 85 | 35 |

TABLE 2

| SAMPLE NUMBER | TEMP °C | ACID/1 mmole $[H^+]$ | FINAL pH | SUPERNATANT Fe CONC(ppm) | % COD REMOVED | SLUDGE VOL % INITIAL |
|---|---|---|---|---|---|---|
| 1 | 60 | 30 | 3.6 | 60 | 65 | 37 |
| 2 | 60 | 40 | 2.4 | 18 | 81 | 36 |
| 3 | 60 | 50 | 2.0 | 25 | 80 | 40 |
| 4 | 50 | 30 | 3.2 | 60 | 61 | 43 |
| 5 | 50 | 40 | 2.3 | 25 | 77 | 35 |
| 6 | 50 | 50 | 2.0 | 33 | 77 | 35 |
| 7 | 40 | 30 | 3.1 | 80 | 61 | 70 |
| 8 | 40 | 40 | 2.3 | 25 | 78 | 38 |
| 9 | 40 | 50 | 2.0 | 33 | 79 | 35 |
| 10 | 30 | 30 | 3.3 | 200 | 55 | 80 |
| 11 | 30 | 40 | 2.5 | 25 | 73 | 62 |
| 12 | 30 | 50 | 2.2 | 28 | 77 | 38 |

EP 0 486 574 B1

## TABLE 3

| APPLIED ACID DOSE | FINAL pH | | SUPERNATANT Fe CONC (MgFe/1) | | SUPERNATANT COD (mg/1) | |
|---|---|---|---|---|---|---|
| (mmol H$^+$/1) | STORED | FRESH | STORED | FRESH | STORED | FRESH |
| 0 | 6.0 | 9.5 | 1465 | 1083 | 10000 | 13800 |
| 10 | 2.6 | 4.4 | 225 | 275 | 660 | 2700 |
| 15 | 2.4 | - | 273 | - | 730 | - |
| 20 | 2.0 | 2.2 | 308 | 78 | 770 | 1030 |
| 30 | 2.0 | 1.9 | 383 | 150 | 890 | 1290 |
| 40 | 1.9 | 1.7 | 535 | 330 | 910 | 1240 |
| 60 | - | 1.5 | - | 450 | - | 1340 |
| 80 | 1.8 | 1.4 | 1018 | 550 | 1000 | 1370 |
| 100 | - | 1.3 | - | 608 | | 1380 |
| 150 | - | 1.1 | - | 565 | | 1470 |

Note: The "STORED" sewage concentrate was taken from the Lower Plenty pilot plant, Victoria and stored at 5°C. The pilot plant was using 47 mgFe/1 to treat the sewage and the wash water flow was 3.3% of raw sewage flow.

The "FRESH" sewage concentrate was taken from the Lower Plenty pilot plant, Victoria and used immediately. The pilot plant was using 38 mgFe/1 to treat the sewage and the wash water flow was 3.3% of raw sewage flow.

EP 0 486 574 B1

## TABLE 4

| ACID ADDED (mmolH$^+$/l) | FINAL pH | SUPERNATANT CONCENTRATION (mg/l) | |
|---|---|---|---|
| | | COD | Al |
| 0 | 10.3 | 4820 | 234 |
| 20 | 7.1 | 3617 | 190 |
| 30 | 5.2 | 713 | 11 |
| 32.5 | 4.7 | 651 | 15 |
| 35 | 4.2 | 618 | 28 |
| 37.5 | 3.9 | 685 | 51 |
| 40 | 3.5 | 745 | 69 |
| 45 | 3.0 | 800 | 140 |
| 50 | 2.6 | 863 | 177 |
| 100 | 2.0 | 996 | 210 |

**Claims**

1. A process for the treatment of sewage or other wastewater containing organic matter characterised in that the process comprises the steps of:-

   (a) mixing sewage or other wastewater containing organic matter with a coagulant/adsorbent which is finely divided particulate mineral or clay material the individual particles of which have a thin hydroxylated surface layer, under conditions whereby at least a substantial proportion of the organic material in the sewage or other wastewater containing organic matter becomes attached to the coagulant/adsorbent;

   (b) separating the coagulant/adsorbent with attached organic material from the mixture to leave a treated liquid effluent;

   (c) treating the separated coagulant/adsorbent from step (b) with alkali thereby to release the organic material therefrom, separating the coagulant/adsorbent from the resultant concentrated slurry containing the organic material; and

   (d) adding acid to the concentrated slurry of organic material to lower the pH to less than 4 and thereby to obtain a sludge which separates under gravity and a supernatant liquor which optionally may be recycled to acidify the incoming sewage or other wastewater containing organic matter.

2. A process as claimed in Claim 1, characterised in that the coagulant/adsorbent particles are of a magnetic or magnetisable material.

3. A process as claimed in Claim 2, characterised in that the magnetic or magnetisable material is gamma iron oxide, magnetite or a ferrite.

4. A process as claimed in any one of the preceding claims, characterised in that the coagulant/adsorbent particles have a particle size of 50 microns or less.

5. A process as claimed in any one of the preceding claims, characterised in that a coagulant is added to the sewage or other wastewater containing organic matter.

6. A process as claimed in Claim 5, characterised in that the coagulant is an inorganic coagulant providing multivalent cations and is mixed with the sewage or other wastewater containing organic matter and coagulant/adsorbent particles in an amount of 0 to 500 mg/L of sewage or other wastewater containing or-

9

ganic matter.

7. A process as claimed in Claim 6, characterised in that the multivalent cations are selected from $Fe^{2+}$, $Fe^{3+}$ and/or $Al^{3+}$.

8. A process as claimed in any one of Claims 5 to 7, characterised in that the coagulant is a polyelectrolyte and is mixed with the sewage or other wastewater containing organic matter and coagulant/adsorbent particles in an amount of 0 to 10 mg/L of sewage or other wastewater containing organic matter.

9. A process as claimed in any one of the preceding claims, characterised in that the pH of the mixture of sewage or other wastewater containing organic matter and coagulant/adsorbent particles is adjusted to in the range of 5 to 9.

10. A process as claimed in any one of the preceding claims, characterised in that the alkali used in step (c) is a solution of sodium hydroxide, ammonia or potassium hydroxide or a lime slurry.

11. A process as claimed in any one of the preceding claims, characterised in that the coagulant/adsorbent particles from step (c) are recycled to step (a).

12. A process as claimed in any one of the preceding claims, characterised in that the sludge is separated by dissolved air flotation.


**Patentansprüche**

1. Verfahren zur Behandlung von organisches Material enthaltendem Kanalwasser oder sonstigem Abwasser, gekennzeichnet durch folgende Stufen:
   (a) Vermischen des organisches Material enthaltenden Kanalwassers oder sonstigen Abwassers mit einem Koagulationsmittel/Adsorptionsmittel in Form eines feinteiligen Mineral- oder Tonmaterials, dessen Einzelteilchen eine dünne hydroxylierte Oberflächenschicht aufweisen, unter solchen Bedingungen, daß zumindest ein merklicher Anteil des organischen Materials in dem organisches Material enthaltenden Kanalwasser oder sonstigen Abwasser an dem Koagulationsmittel/Adsorptionsmittel haften bleibt;
   (b) Abtrennen des Koagulationsmittels/Adsorptionsmittels mit dem daran haftenden organischen Material von dem Gemisch unter Hinterlassung eines behandelten flüssigen Ablaufs;
   (c) Behandeln des abgetrennten Koagulationsmittels/Adsorptionsmittels aus Stufe (b) mit einem Alkali zur Freigabe des organischen Materials (von diesem) und Abtrennen des Koagulationsmittels/Adsorptionsmittels aus der erhaltenen, das organische Material enthaltenden konzentrierten Aufschlämmung und
   (d) Zusatz von Säure zu der konzentrierten Aufschlämmung des organischen Materials zur Senkung des pH-Werts auf unter 4 zur Gewinnung eines sich unter Schwerkraft abtrennenden Schlamms und eines flüssigen Überstands, der gegebenenfalls zum Ansäuern des ankommenden, organisches Material enthaltenden Kanalwassers oder sonstigen Abwassers rückgeführt werden kann.

2. Verfahren nach Anspruch 1, dadurch gekennzeichnet, daß die Koagulationsmittel/Adsorptionsmittel-Teilchen aus einem magnetischen oder magnetisierbaren Material bestehen.

3. Verfahren nach Anspruch 2, dadurch gekennzeichnet, daß das magnetische oder magnetisierbare Material aus $\gamma$-Eisenoxid, Magnetit oder einem Ferrit besteht.

4. Verfahren nach einem der vorhergehenden Ansprüche, dadurch gekennzeichnet, daß die Koagulationsmittel/Adsorptiosmittel-Teilchen eine Teilchengröße von 50 μm oder weniger aufweisen.

5. Verfahren nach einem der vorhergehenden Ansprüche, dadurch gekennzeichnet, daß dem organisches Material enthaltenden Kanalwasser oder sonstigen Abwasser ein Koagulationsmittel zugesetzt wird.

6. Verfahren nach Anspruch 5, dadurch gekennzeichnet, daß das Koagulationsmittel aus einem mehrwertige Kationen liefernden anorganischen Koagulationsmittel besteht und mit dem organisches Material enthaltenden Kanalwasser oder sonstigen Abwasser und den Koagulationsmittel/Adsorptionsmittel-Teilchen in einer Menge von 0 bis 500 mg/Liter des organisches Material enthaltenden Kanalwassers oder sonstigen Abwassers gemischt wird.

7. Verfahren nach Anspruch 6, dadurch gekennzeichnet, daß die mehrwertigen Kationen aus $Fe^{2+}$, $Fe^{3+}$ und/oder $Al^{3+}$ ausgewählt werden.

8. Verfahren nach einem der Ansprüche 5 bis 7, dadurch gekennzeichnet, daß das Koagulationsmittel aus einem Polyelektrolyt besteht und mit dem organisches Material enthaltenden Kanalwasser oder sonstigen Abwasser und den Koagulationsmittel/Adsorptionsmittel-Teilchen in einer Menge von 0 bis 10 mg/Liter des organisches Material enthaltenden Kanalwassers oder sonstigen Abwassers gemischt wird.

9. Verfahren nach einem der vorhergehenden Ansprüche, dadurch gekennzeichnet, daß der pH-Wert des Gemischs aus organisches Material enthaltendem Kanalwasser oder sonstigem Abwasser und Koagulationsmittel/Adsorptionsmittel-Teilchen auf einen Wert im Bereich von 5 bis 9 eingestellt wird.

10. Verfahren nach einem der vorhergehenden Ansprüche, dadurch gekennzeichnet, daß das in Stufe (c) verwendete Alkali aus einer Lösung von Natriumhydroxid, Ammoniak oder Kaliumhydroxid oder einer Kalkaufschlämmung besteht.

11. Verfahren nach einem der vorhergehenden Ansprüche, dadurch gekennzeichnet, daß die Koagulationsmittel/Adsorptionsmittel-Teilchen aus Stufe (c) in Stufe (a) rückgeführt werden.

12. Verfahren nach einem der vorhergehenden Ansprüche, dadurch gekennzeichnet, daß der Schlamm durch Flotieren mit gelöster Luft abgetrennt wird.

**Revendications**

1. Procédé pour le traitement d'eaux d'égouts ou d'autres eaux usées contenant une substance organique, caractérisé en ce que le procédé comprend les étapes consistant à :
   (a) mélanger les eaux d'égouts ou autres eaux usées contenant des matières organiques avec un coagulant/adsorbant qui est une substance argileuse ou inorganique sous forme de particules finement divisées dont les particules ont chacune une fine couche hydroxylée en surface dans des conditions telles qu'au moins une proportion importante de matières organiques des eaux d'égouts ou autres eaux usées contenant des matières organiques se retrouve fixée au coagulant/adsorbant ;
   (b) séparer le coagulant/adsorbant sur lequel est fixée la matière organique du milieu pour laisser un effluent liquide traité ;
   (c) traiter le coagulant/adsorbant séparé de l'étape (b) avec une substance alcaline de façon à libérer la matière organique, séparer le coagulant/adsorbant de la suspension concentrée résultante contenant la matière organique, et
   (d) ajouter un acide à la suspension concentrée contenant la matière organique, de façon à baisser le pH jusqu'à moins de 4 et obtenir ainsi un dépôt par décantation et un liquide surnageant qui peut éventuellement être recyclé de façon à acidifier les eaux d'égouts ou autres eaux usées d'alimentation contenant des matières organiques.

2. Procédé selon la revendication 1, caractérisé en ce que les particules d'adsorbant/coagulant sont une substance magnétique magnétisable.

3. Procédé selon la revendication 2, caractérisé en ce que la substance magnétique ou magnétisable est un oxyde de fer gamma de la magnétite ou de la ferrite.

4. Procédé selon l'une quelconque des revendications précédentes, caractérisé en ce que les particules de coagulant/adsorbant ont une taille particulaire de 50 µm ou moins.

5. Procédé selon l'une quelconque des revendications précédentes, caractérisé en ce qu'un coagulant est ajouté aux eaux d'égouts ou autres eaux usées contenant des matières organiques.

6. Procédé selon la revendication 5, caractérisé en ce que le coagulant est un coagulant inorganique fournissant des cations polyvalents et en ce qu'il est ajouté aux eaux d'égouts ou autres eaux usées contenant des matières organiques et des particules de coagulant/adsorbant dans une proportion de 0 à 500 mg par litre d'eaux d'égouts ou autres eaux usées contenant des matières organiques.

7.  Procédé selon la revendication 6, caractérisé en ce que les cations polyvalents sont choisis parmi $Fe^{2+}$, $Fe^{3+}$ et/ou $Al^{3+}$.

8.  Procédé selon l'une quelconque des revendications 5 à 7, caractérisé en ce que le coagulant est un polyélectrolyte et est mélangé aux eaux d'égouts ou autres eaux usées contenant des matières organiques et des particules de coagulant/adsorbant dans une proportion de 0 à 10 mg par litre d'eaux d'égouts ou autres eaux usées contenant des substances organiques.

9.  Procédé selon l'une quelconque des revendications précédentes, caractérisé en ce que le pH du mélange des eaux d'égouts ou autres eaux usées contenant des matières organiques et des particules de coagulant/adsorbant est ajusté dans la plage allant de 5 à 9.

10. Procédé selon l'une quelconque des revendications précédentes, caractérisé en ce que la substance alcaline utilisée à l'étape (c) est une solution d'hydroxyde de sodium, d'ammoniaque ou d'hydroxyde de potassium ou une suspension à base de chaux.

11. Procédé selon l'une quelconque des revendications précédentes, caractérisé en ce que les particules de coagulant/adsorbant de l'étape (c) sont recyclées à l'étape (a).

12. Procédé selon l'une quelconque des revendications précédentes, caractérisé en ce que le dépôt est séparé par flottage d'air dissous.

FIG. 1

FIG. 2

EP 0 486 574 B1